# EUROPEAN PATENT APPLICATION

(11) **EP 1 578 077 A1**
(43) Date of publication of application: **21.09.2005**
(21) Application number: 03786247.1
(22) Date of filing: 24.12.2003
(51) Int. Cl.: H04L 25/49, H04L 7/00, H04L 12/42

(54) **DATA TRANSMISSION SYSTEM AND DATA TRANSMISSION DEVICE**

(30) Priority: 25.12.2002 JP 2002374214
(71) Applicant: MATSUSHITA ELECTRIC INDUSTRIAL CO., LTD., Osaka 571-8501 (JP)
(72) Inventor: UMEI, Toshitomo, Settsu-shi, Osaka 566-0033 (JP); KATTA, Noboru, Kawasaki-shi, Kanagawa 216-0005 (JP); YASUI, Nobuhiko, Moriguchi-shi, Osaka 570-0017 (JP); SAKAI, Takahisa, Yokohama-shi, Kanagawa, 224-0003 (JP); MIZUGUCHI, Yuji, Hirakata-shi, Osaka 573-0162 (JP); TAKAHIRA, Yutaka, Neyagawa-shi, Osaka 572-0083 (JP); KAWADA, Hirotsugu, Osaka-shi, Osaka 543-0043 (JP); AKITA, Takashi, Osaka-shi, Osaka 532-0022 (JP)
(74) Representative: Pautex Schneider, Nicole Véronique
(86) International application number: PCT/JP2003/016521
(87) International publication number: WO 2004/059931

(57) **Abstract**

A data transmission device (1a) generates and transmits a lock signal for establishing clock synchronization with data transmission devices (1b-n). The data transmission device (1a) is capable of generating a pattern 1 lock signal for giving a notice of start of communication by use of data subjected to eight-value mapping, and a pattern 2 lock signal for giving a notice of start of communication by use of data subjected to four-value mapping. One of the two types of lock signals is transmitted to each data transmission device. Determining which lock signal has been received enables each data transmission device to give a notice of data communication method prior to training.

## Description

### TECHNICAL FIELD

The present invention relates to a data transmission system and, more specifically, to a data transmission system for transmitting data in a unidirectional manner according to a predetermined protocol in a ring network in which a plurality of data transmission devices are connected so as to form a ring structure.

### BACKGROUND ART

In recent years, in car navigation or when doing the Internet, e.g., ITS (Intelligent Transport Systems), or transmitting image information in space such as the inside of a motor vehicle, high-volume and high-speed communication is required. A great deal of study is being made on communication systems for transmitting such digitized video or audio data, or digital data such as computer data or the like. Also, introduction of a network for transmitting digital data into even space such as the inside of a motor vehicle is becoming more and more widespread. For example, this intra-vehicle network uses a ring topology as its physical topology, and connects a plurality of nodes with the ring topology to form a unidirectional ring LAN, thus aiming to achieve integrated connection of an audio device, a navigation device, an information terminal device, or the like. For example, Media Oriented Systems Transport (hereinafter referred to as MOST) is used for the aforementioned ring LAN as an information communications protocol. The MOST refers to not only the communications protocol but also a method for constructing a distributed system. Data on a MOST network is transmitted with a frame being a basic unit, and frames are sequentially transmitted between the nodes in a single direction.

Noticeably, in the case of a ring LAN provided in the inside of a vehicle or the like, radiated noise may cause malfunction of another electronic device disposed on a motor vehicle or the like; besides, there is a necessity to perform accurate transmission without receiving any influence of radiated noise from another device. For this reason, in a ring LAN using a conventional MOST, each node is connected by use of an optical-fiber cable, whereby protection from noise is improved while preventing generation of electromagnetic waves.

Meanwhile, in some examples, electrical communication (metal) is performed using inexpensive cables such as twisted-pair cables or coaxial cables, while data transmission at high speed exceeding 20Mbps is realized with a little radiated noise and improved protection from noise (see, for example, International Publication Pamphlet No. 02/30079).

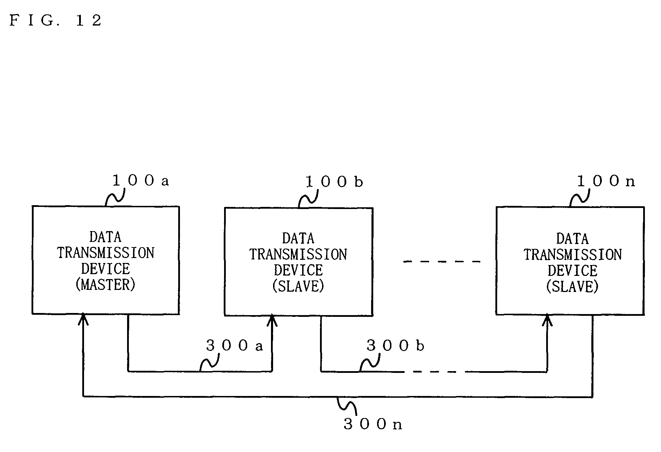

A data transmission system in which each node is connected with an inexpensive cable as describe above is described below with reference to the drawings. FIG. 12 is a block diagram illustrating a configuration of data transmission system.

The data transmission system illustrated in FIG. 12 includes data transmission devices 100a-n and transmission lines 300a-n. One of the data transmission devices 100a-n is a master data transmission device 100a, and the others are slave data transmission devices 100b-n. The data transmission devices 100a-n are connected via the transmission lines 300a-n so as to form a ring structure. Data is transmitted between the data transmission devices 100a-n in a direction indicated by arrows according to a communications protocol of the MOST.

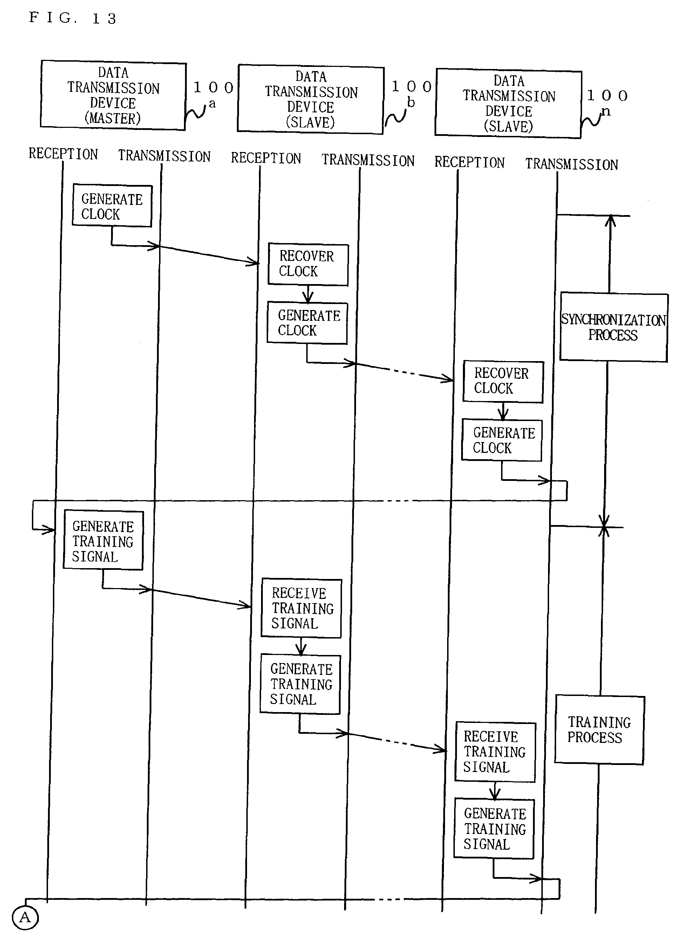

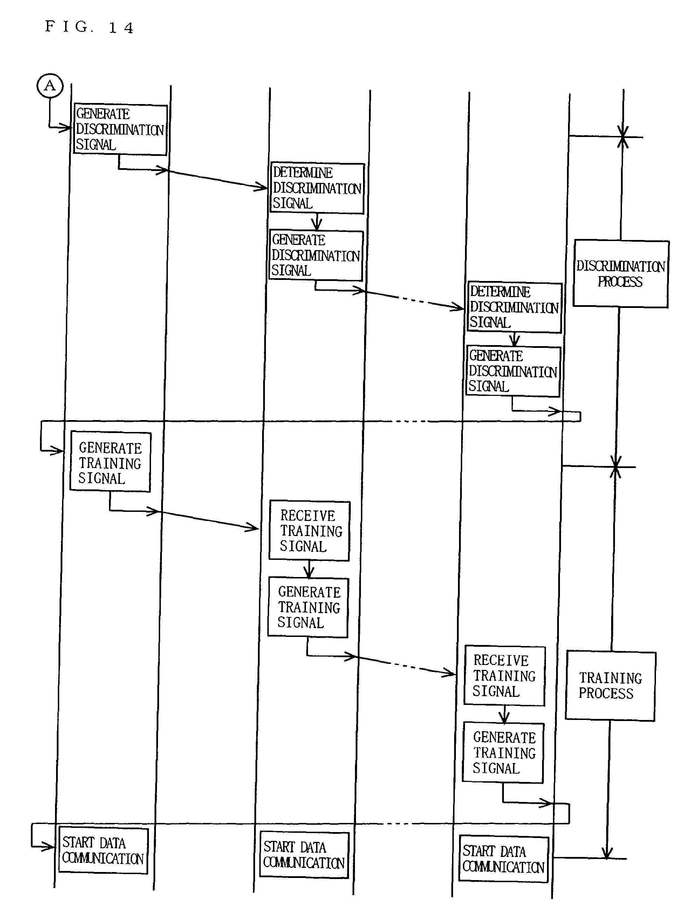

In the above-described data transmission system, data transmission employing digital data subjected to so-called eight-value mapping is normally performed. The data transmission by use of digital data subjected to eight-value mapping is a kind of multi-valued transmission in which data transmission is performed while one or more bits of data as a data symbol is assigned to a signal level, i.e. , a data transmission method where eight degrees of signal levels are assigned (for detailed explanation, see International Publication No. WO-02/30077). Meanwhile, in recent years, in addition to the data transmission employing data subjected to eight-value mapping, data transmission methods other than the data transmission employing data subjected to eight-value mapping have begun to be proposed, e.g., data transmission employing data subjected to four-value mapping or five-value mapping. In accordance with the appearance of such various kinds of data transmission methods, data transmission systems which switch data transmission methods depending on how they are used have begun to be proposed. Such switching of data transmission methods is generally carried out according to a flow as illustrated in FIGS. 13 and 14. This switching between data transmission methods is described in detail below.

First, the data transmission device 100a serving as a master generates a lock signal for establishing clock synchronization with another data transmission device and transmits it to the data transmission device 100b. Receiving the lock signal, the data transmission device 100b recovers the acquired lock signal and establishes clock synchronization with the data transmission device 100a. Next, the data transmission device 100b generates a lock signal and transmits it to the data transmission device 100c. Thereafter, the data transmission devices 100c-n each perform the same operation as the data transmission device 100b has done. Then, a lock signal transmitted by the data transmission device 100n reaches the data transmission device 100a. Thus, clock synchronization is established between the data transmission devices 100a-n.

Next, the data transmission device 100a creates a training signal for setting determination levels, which will serve as reference for data determination, and transmits it to the data transmission device 100b. The training signal transmitted at this time may be a training signal for eight-value mapping or a training signal for another method. However, it is assumed that a training signal for eight-value mapping is transmitted here.

Receiving the training signal, the data transmission device 100b uses the acquired training signal to set determination levels, which will serve as reference for data determination for eight-value mapping. Next, the data transmission device 100b creates a training signal for eight-value mapping and transmits it to the next data transmission device 100c. Thereafter, the data transmission devices 100c-n each perform the same operation as the data transmission device 100b has done. Then, a training signal transmitted from the data transmission device 100n reaches the data transmission device 100a. Thus, setting of determination levels serving as reference for data determination for eight-value mapping is performed on the data transmission devices 100a-n in the data transmission system.

Next, the data transmission device 100a transmits, to the data transmission device 100b, a discrimination signal for notifying the other data transmission devices 100b-n which method will be applied to data transmission, the eight-value mapping or another method.

Receiving the discrimination signal, the data transmission device 100b determines, based on the received discrimination signal, which method will be employed for data transmission. Based on the determination result, the data transmission device 100b generates a discrimination signal and transmits it to the next data transmission device. Thereafter, the data transmission devices 100c-n each perform the same operation as the data transmission device 100b has done. A discrimination signal transmitted from the data transmission device 100n is received by the data transmission device 100a. Thus, the data transmission devices 100a-n included in the data transmission system recognize the method to be employed for data transmission.

Next, the data transmission device 100a creates a training signal for the data transmission method recognized by the data transmission devices and transmits it to the data transmission device 100b. Thereafter, the data transmission devices perform the same process as the above-described training process. Thus, the setting of determination levels, which serve as reference for data determination for the data transmission method to be employed for communication, is performed on the data transmission devices 100a-n. Thereafter, data communication starts in the data transmission system.

### DISCLOSURE OF THE INVENTION

As described above, in the above-described conventional data transmission system, a training process is performed once after a synchronization process using the lock signal, and thereafter, the determination levels set by the training process are used to perform a process for discriminating between eight-value mapping and the other method. Thereafter, a training process is performed again, using a training signal for the transmission method recognized by the above-described discrimination process,and then, data communication is started. That is, in the conventional data transmission system, the training process is required to be performed twice. This is because, in the above-described conventional data transmission system, the discrimination process for recognizing the data transmission method cannot be performed before a training process is performed.

Therefore, an object of the present invention is to provide a data transmission system in which, before a training process is performed, predetermined information to give a notice of the data transmission method or the like can be presented to the data transmission devices.

In a data transmission system according to the present invention, master lock signal generation means generates a lock signal for establishing clock synchronization with the slave data transmission devices in initial operation of the ring network, the lock signal having predetermined information embedded therein; master transmission means outputs the lock signal generated by the master lock signal generation means to a slave data transmission device connected downstream thereof to relay the lock signal through the ring network; slave reception means receives the lock signal outputted from the master transmission means; and information acquisition means acquires the predetermined information from the lock signal received by the slave reception means.

Also, the master lock signal generation means may generate a plurality of patterns of lock signals including the predetermined information of a plurality of types; the master data transmission device may further include determination means for determining, from among the plurality of patterns of lock signals, which pattern of lock signal to cause the master lock signal generation means to output; and the master transmission means may transmit that pattern of lock signal which the determination means has caused the master lock signal generation means to output.

Also, the information acquisition means may further include storage means for storing signals identical to the plurality of patterns of lock signals, and may compare the lock signal received by the slave reception means with the signals stored in the storage means and determine which pattern of lock signal has been acquired, thereby acquiring the predetermined information.

Also, the information acquisition means may further include storage means for storing, for each of the plurality of patterns of lock signals, a pattern of differences in signal level between each symbol and a symbol positioned next to that symbol in the lock signal, and difference means for obtaining differences in signal level between each symbol and a symbol positioned next to that symbol in the lock signal received by the slave reception means, and may compare the differences obtained by the difference means with the patterns of differences of the lock signals stored in the storage means, and determine which pattern of lock signal has been acquired, thereby acquiring the predetermined information.

Also, the slave data transmission devices each may include slave lock signal generation means for generating a lock signal having a pattern identical to the pattern of the lock signal determined by the information acquisition means, and slave transmission means for transmitting the lock signal generated by the slave lock signal generation means to a data transmission device connected downstream thereof.

Also, the slave data transmission devices each may further include synchronization means for establishing clock synchronization with the master data transmission device based on the lock signal received by the slave reception means, and the information acquisition means may acquire the predetermined information included in the lock signal, based on timing of the clock synchronization established by the synchronization means.

Also, it is desirable that the predetermined protocol be MOST (Media Oriented Systems Transport).

Also, it is desirable that each data transmission device perform communication by use of an electric signal.

It is desirable that a plurality of communication methods be available in the ring network, and that the predetermined information be information for switching between communication methods in the ring network.

Also, a multi-valued electric signal may be transmitted in the ring network; a plurality of methods for setting determination levels may be available for determining data included in the multi-valued erectric signal; and the communication methods in the ring network may be the plurality of methods for setting the determination levels in data communication.

Also, the present invention is directed not only to a system but also to a master data transmission device used in the system. Specifically, in the master data transmission device, master clock signal creation means generates a lock signal for establishing clock synchronization with the slave data transmission devices in initial operation of the ring network, the lock signal having predetermined information embedded therein; and master transmission means outputs the lock signal generated by the master lock signal generation means to a slave data transmission device connected downstream thereof to relay the lock signal through the ring network.

Also, the master lock signal generation means may generate a plurality of patterns of lock signals including the predetermined information of a plurality of types; and the master data transmission device may further comprise determination means for determining, from among the plurality of patterns of lock signals, which pattern of lock signal to cause the master lock signal generation means to output; and the master transmission means may transmit that pattern of lock signal which the determination means has caused the master lock signal generation means to output.

Also, it is desirable that the predetermined protocol be MOST (Media Oriented Systems Transport).

Also, it is desirable that the data be transmitted by use of an electric signal.

Also, a plurality of communication methods may be available in the ring network, and the predetermined information may be information for switching between communication methods in the ring network.

Also, a multi-valued electric signal may be transmitted in the network; a plurality of methods for setting determination levels may be available for determining data included in the multi-valued erectric signal; and the communication methods in the ring network may be the plurality of methods for setting the determination levels in data communication.

Also, the present invention is directed not only to the master data transmission device but also to a slave data transmission device. Specifically, slave reception means may receive the lock signal outputted from the master data transmission device; and information acquisition means may acquire the predetermined information from the lock signal received by the slave reception means.

The master data transmission device may transmit one of a plurality of patterns of lock signals including the predetermined information of a plurality of types to be relayed through the ring network; the information acquisition means may further include storage means for storing signals identical to the plurality of patterns of lock signals, and may compare the lock signal received by the slave reception means with the signals stored in the storage means, and determine which pattern of lock signal has been acquired, thereby acquiring the predetermined information.

Also, the master data transmission device may transmit one of a plurality of patterns of lock signals including the predetermined information of a plurality of types to be relayed through the ring network; and the information acquisition means may further include storage means for storing, for each of the plurality of patterns of lock signals, a pattern of differences in signal level between each symbol and a symbol positioned next to that symbol in the lock signal, and difference means for obtaining differences in signal level between each symbol and a symbol positioned next to that symbol in the lock signal received by the slave reception means, and may compare the differences obtained by the difference means with the patterns of differences of the lock signals stored in the storage means, and determine which pattern of lock signal has been acquired, thereby acquiring the predetermined information.

Also, slave lock signal generation means may generate a lock signal having a pattern identical to the pattern of the lock signal determined by the information acquisition means; and slave transmission means may transmit the lock signal generated by the slave lock signal generation means to the master data transmission device or another of the at least one slave data transmission device connected downstream thereof.

Also, synchronization means may establish clock synchronization with the master data transmission device based on the lock signal received by the slave reception means, and the information acquisition means may acquire the predetermined information included in the lock signal, based on timing of the clock synchronization established by the synchronization means.

Also, synchronization means may establish clock synchronization with the master data transmission device based on the lock signal received by the slave reception means, and the information acquisition means may included in the lock signal, based on timing of the clock synchronization established by the synchronization means.

Also, it is desirable that the predetermined protocol be MOST (Media Oriented Systems Transport).

Also, it is desirable that the data be transmitted by use of an electric signal.

Also, a plurality of communication methods may be available in the ring network, and the predetermined information may be information for switching between communication methods in the ring network.

Also, a multi-valued electric signal may be transmitted in the network; a plurality of methods for setting determination levels may be available for determining data included in the multi-valued erectric signal; and the communication methods in the ring network may be the plurality of methods for setting the determination levels in data communication.

According to the present invention, the master data transmission device transmits a lock signal having predetermined information embedded therein to each slave data transmission device at the time of initial operation. Therefore, each slave data transmission device is able to acquire the predetermined information before a training process.

Also, since a lock signal having a pattern selected from previously prepared patterns is transmitted, the master data transmission device is not required to generate information within itself and generate a lock signal based on the information. This allows the master data transmission device to have a simple internal structure. Also, since patterns of lock signals to be transmitted are previously determined, the slave data transmission device is able to perform determination easily.

Also, the slave data transmission device knows beforehand the patterns of lock signals to be transmitted, and compares the lock signal received after transmission with this knowledge, thereby acquiring information. In other words , it is made possible to acquire information only by determining with which pattern of the lock signals the pattern of the lock signal corresponds. This allows the slave data transmission device to acquire the information easily and have a simple internal structure.

Also, instead of the value of each symbol being used for determination, a difference between the value of each symbol and the value of a symbol next to the symbol is used for determination; therefore, influence of fluctuation or difference of a direct-current component occurring between transmission and reception can be eliminated. Moreover, it is made possible that the predetermined information is acquired by simple determination.

Also, instead of a lock signal outputted from the master data transmission device circulating through the ring network, each slave data transmission device generates a lock signal identical to a lock signal it receives. This decreases the probability that a problem of deterioration of a lock signal as a result of being transmitted through a long transmission line will occur.

Also, by the lock signal, the slave data transmission device is able to establish synchronization with the master data transmission device and, in addition, acquire predetermined information.

Also, even in a data transmission system to which MOST is applied, information is embedded in a lock signal, whereby it is made possible to report the information to each slave data transmission device.

Also, in a data transmission system for electrical communication, information is embedded in a lock signal, whereby it is made possible to report the information to each slave data transmission device.

Also, in many cases, information as to the communication method is required to be reported in the initial operation stage. Embedding the information as to the communication method in a lock signal makes it possible to report the information as to the communication method to each slave data transmission device in an early stage. As a result, reduction of time for initial operation and reduction of processing load on each data transmission device at the time of initial operation are achieved.

In general, a communication method is a method for determining levels of digital values of transmitted data. Such methods include, for example, a communication method by use of data subjected to four-value mapping and a communication method by use of data subjected to eight-value mapping. Information as to these methods is commonly reported after a process of setting the determination levels (i.e. , a training process), which follows a synchronization process performed with the lock signal. Then, after the report is made, a training process is performed again for the communication method which is reported. Thus, a training process has been required to be performed twice. In contrast, according to the present invention, since the aforementioned information is included in a lock signal, each slave data transmission device is able to know the communication method after the lock signal is transmitted. As a result, the need to perform a training process twice is eliminated.

Also, the master data transmission device transmits a lock signal having predetermined information embedded therein to each slave data transmission device at the time of initial operation. Thus, the master data transmission device is able to report the predetermined information to the slave data transmission device before a training process.

Also, since a lock signal having a pattern selected from previously prepared patterns is transmitted, the master data transmission device is not required to generate information within itself and generate a lock signal based on the information. This allows the master data transmission device to have a simple internal structure.

Also, even in a master data transmission device for MOST, information is embedded in a lock signal, whereby it is made possible to report the information to each slave data transmission device.

Also, in a master data transmission device for electrical communication, information is embedded in a lock signal, whereby it is made possible to report the information to each slave data transmission device.

Also, in many cases, information as to the communication method is required to be reported in the initial operation stage. Embedding the information as to the communication method in a lock signal makes it possible to report the information as to the communication method to each slave data transmission device in an early stage. As a result, reduction of time for initial operation and reduction of processing load on each data transmission device at the time of initial operation are achieved.

In general, a communication method is a method for determining levels of digital values of transmitted data. Such methods include, for example, a communication method by use of data subjected to four-value mapping and a communication method by use of data subjected to eight-value mapping. Information as to these methods is commonly reported after a process of setting the determination levels (i.e. , a training process), which follows a synchronization process performed with the lock signal. Then, after the report is made, a training process is performed again for the communication method which is reported. Thus, a training process has been required to be performed twice. In contrast, according to the present invention, since the aforementioned information is included in a lock signal, each slave data transmission device is able to know the communication method after the lock signal is transmitted. As a result, the need to perform a training process twice is eliminated.

Also, at the time of initial operation, a lock signal having predetermined information embedded therein is transmitted from the master data transmission device to each slave data transmission device. Thus, each slave data transmission device is able to acquire the predetermined information before a training process.

Also, the slave data transmission device knows beforehand the patterns of lock signals to be transmitted, and compares the lock signal received after transmission with this knowledge, thereby acquiring information. In other words , it is made possible to acquire information only by determining with which pattern of the lock signals the pattern of the lock signal corresponds. This allows the slave data transmission device to acquire the information easily and have a simple internal structure.

Also, instead of the value of each symbol being used for determination, a difference between the value of each symbol and the value of a symbol next to the symbol is used for determination; therefore, influence of fluctuation or difference of a direct-current component occurring between transmission and reception can be eliminated.

Also, instead of a lock signal outputted from the master data transmission device circulating through the ring network, each slave data transmission device generates a lock signal identical to a lock signal it receives. This decreases the probability that a problem of deterioration of a lock signal as a result of being transmitted through a long transmission line will occur.

Also, by the lock signal, the slave data transmission device is able to establish synchronization with the master data transmission device and, in addition, acquire the predetermined information.

Also, even in a slave data transmission device to which MOST is applied, it is made possible to acquire the predetermined information embedded in a lock signal.

Also, it is made possible that even a slave data transmission device for electrical communication acquires predetermined information embedded in a lock signal.

Also, in many cases, information as to the communication method is required to be reported in the initial operation stage. Embedding the information as to the communication method in a lock signal makes it possible to report the information as to the communication method to each slave data transmission device in an early stage. As a result, reduction of time for initial operation and reduction of processing load on each data transmission device at the time of initial operation are achieved.

In general, a communication method is a method for determining levels of digital values of transmitted data. Such methods include, for example, a communication method by use of data subjected to four-value mapping and a communication method by use of data subjected to eight-value mapping. Information as to these methods is commonly reported after a process of setting the determination levels (i.e., a training process), which follows a synchronization process performed with the lock signal. Then, after the report is made, a training process is performed again for the communication method which is reported. Thus, a training process has been required to be performed twice. In contrast, according to the present invention, since the aforementioned information is included in a lock signal, each slave data transmission device is able to know the communication method after the lock signal is transmitted. As a result, the need to perform a training process twice is eliminated.

### BRIEF DESCRIPTION OF THE DRAWINGS

FIG. 1 is a block diagram illustrating an overall configuration of a data transmission system according to an embodiment of the present invention.
FIG. 2 is a block diagram illustrating a structure of a data transmission device according to an embodiment of the present invention.
FIG. 3 is a block diagram illustrating a detailed structure of a transmission/reception section according to an embodiment of the present invention.
FIG. 4 is a block diagram illustrating a detailed structure of a lock signal generation section according to an embodiment of the present invention.
FIG. 5 is a diagram illustrating a waveform of a "pattern 1 lock signal".
FIG. 6 is a diagram illustrating a waveform of a "pattern 2 lock signal".
FIG. 7 is a diagram illustrating data outputted from a difference section and data stored in a first ROM and a second ROM.
FIG. 8 is a block diagram illustrating a detailed structure of a pattern discrimination section.
FIG. 9 is a diagram for explaining an operation of a shift register.
FIG. 10 is a flowchart illustrating initial operations performed by a master data transmission device and a slave data transmission device before data communication is started.
FIG. 11 is a flowchart illustrating initial operations performed by the master data transmission device and the slave data transmission device before data communication is started.
FIG. 12 is a block diagram illustrating an overall configuration of a conventional data transmission system.
FIG. 13 is a diagram illustrating a flow of signals between a master data transmission device and slave data transmission devices in the conventional data transmission system, before data communication is started.
FIG. 14 is a diagram illustrating a flow of signals between the master data transmission device and the slave data transmission devices in the conventional data transmission system, before data communication is started.

### BEST MODE FOR CARRYING OUT THE INVENTION

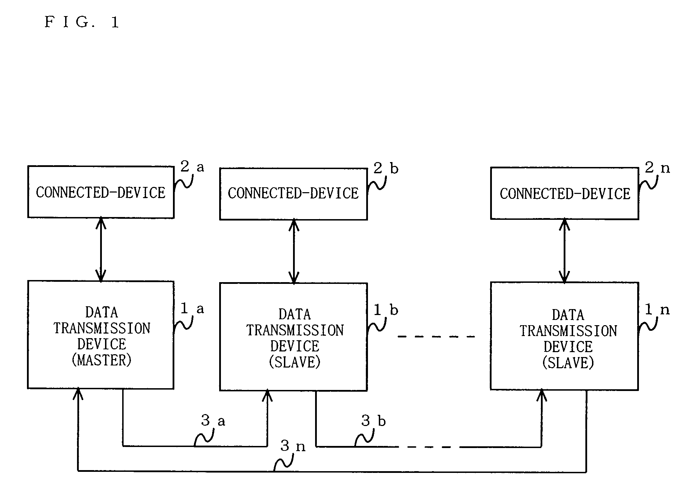

Hereinafter, an embodiment of the present invention is described with reference to the drawings. FIG. 1 is a block diagram illustrating an overall configuration of a data transmission system to which data transmission devices according to the present embodiment are applied.

In FIG. 1, the data transmission system has a ring topology as its physical topology in which a plurality of nodes are connected according to the ring topology, thereby forming a unidirectional ring LAN. An example of such a data transmission system is described below where the nodes are composed of data transmission devices 1a-n, which are connected via transmission lines 3a-n so as to form a ring structure, and transmitted data is transmitted via transmission lines 3a-n in a single direction. To the data transmission devices 1a-n are connected connected-devices (e.g. , audio devices, navigation devices, or information terminal devices) 2a-n each performing a process based on data transmitted through the data transmission system and outputting the result to the data transmission system. Note that as a common hardware configuration, the data transmission devices 1a-n and the connected-devices 2a-n respectively have integral structures.

For example, Media Oriented Systems Transport (hereinafter referred to as MOST) is used as an information communications protocol for the above-described data transmission system. Data transmitted using the MOST as the communications protocol is transmitted with a frame being a basic unit, and frames are sequentially transmitted between the data transmission devices 1 in a single direction. In other words, the data transmission device 1a outputs data to the data transmission device 1b via the transmission line 3a. The data transmission device 1b outputs the data to the data transmission device 1c via the transmission line 3b. The data transmission devices 1c-n each perform the same operation as the data transmission device 1b has done, thereby outputting the data to the next data transmission device. Then, the data outputted from the data transmission device In is inputted to the data transmission device 1a. Inexpensive cables such as twisted-pair cables or coaxial cables are used as the transmission lines 3a-n, and the data transmission devices 1 mutually perform electrical communication (metal). At the time of turning on of power of the data transmission system, the data transmission device 1a is a master, which transmits data with a clock of its own, and the other data transmission devices 1b-n are slaves, which lock the frequency to the clock generated at the master.

In the data transmission system according to the present embodiment, the data transmission devices are capable of performing communication by use of data subjected to four-value mapping or data subjected to eight-value mapping. At the time of initial operation performed when starting communication, the master data transmission device 1a notifies each of the data transmission devices 1b-n which of the following will be used by the data transmission devices to perform communication, data subjected to four-value mapping and data subjected to eight-value mapping. More specifically, the data transmission device 1a embeds, in a lock signal for establishing clock synchronization with the data transmission devices 1b-n, information for recognizing which of the following will be used for communication, data subjected to four-value mapping and data subjected to eight-value mapping, and transmits the information to the data transmission devices 1b-n.

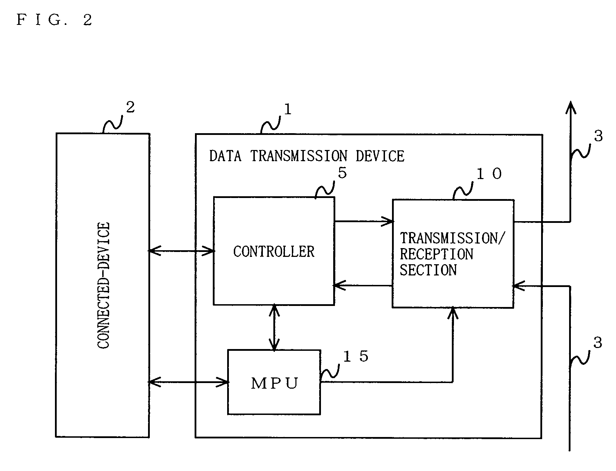

With reference to FIG. 2, the configuration of the data transmission device 1 is described. FIG. 2 is a block diagram illustrating the configuration of the data transmission device 1. The data transmission device 1 includes a controller 5, a transmission/reception section 10, and a microcomputer (MPU) 15. The controller 5 is, for example, composed of an LSI. A description is given below with reference to the case where the MOST is used as an exemplary communications protocol used in the data transmission system.

To the controller 5 is connected the connected-device 2 which performs a process based on data transmitted in the data transmission system and outputs the result to the data transmission system. As its function, the controller 5 converts data from the connected-device 2 connected thereto into a protocol stipulated by the MOST, and outputs digital data TX to the transmission/reception section 10; and digital data RX outputted from the transmission/reception section 10 is inputted to the controller 5 and then transmitted to the connected-device 2 connected thereto. The signal format of the transmission lines 3 inputted to or outputted from the transmission/reception section 10 is either for data subjected to four-value mapping or for data subjected to eight-value mapping, which is set at the time of initial operation performed when the data transmission system starts communication.

The MPU 15 controls the controller 5, the transmission/reception section 10, and the aforementioned connected-device 2 based on a transmission mode of the data transmission device 1. For example, the MPU 15 controls a process of switching of whether the data transmission device 1 is to perform communication by use of data subjected to four-value mapping or communication by use of data subjected to eight-value mapping, or the like.

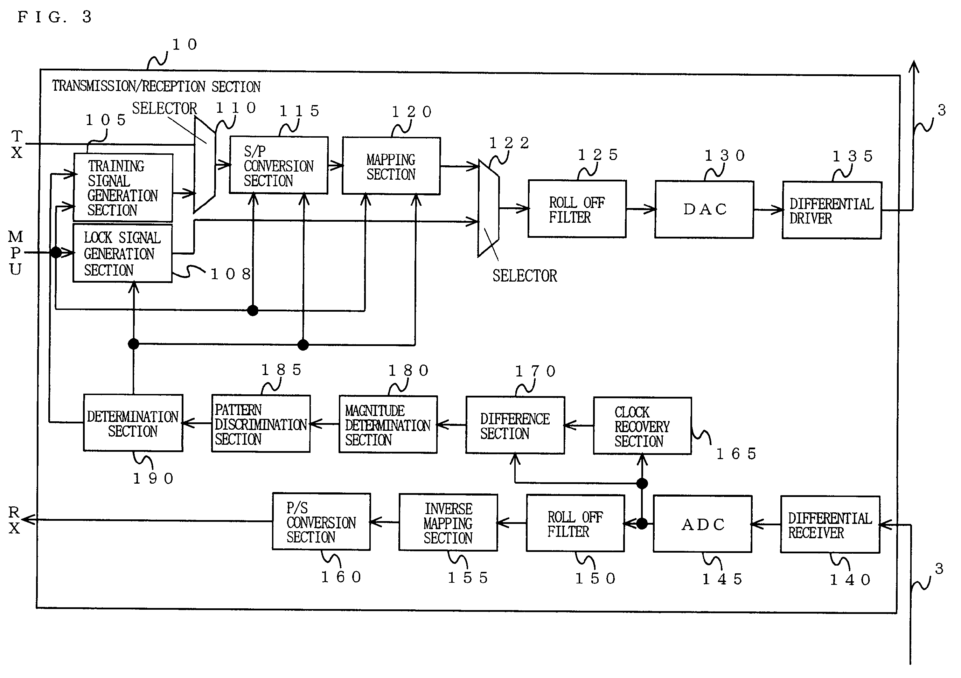

The transmission/reception section 10, typically composed of an LSI, includes, as shown in FIG. 3, a training signal generation section 105, a lock signal generation section 108, a selector 110, a S/P (Serial/Parallel) conversion section 115, a mapping section 120, a selector 122, a roll off filter 125, a DAC (digital to analog converter) 130, a differential driver 135, a differential receiver 140, an ADC (analog to digital converter) 145, a roll off filter 150, an inverse mapping section 155, a P/S (Parallel/Serial) conversion section 160, a clock recovery section 165, a difference section 170, a magnitude determination section 180, a pattern discrimination section 185, and a determination section 190. These components are classified into three groups, i.e., a transmission group, a reception group, and a determination group.

First, the transmission group is described. The transmission group, which includes the training signal generation section 105, the lock signal generation section 108, the selector 110, the S/P (Serial/Parallel) conversion section 115, the mapping section 120, the selector 122, the roll off filter 125, the DAC (digital to analog converter) 130, and the differential driver 135, transmits a signal to a data transmission device connected downstream.

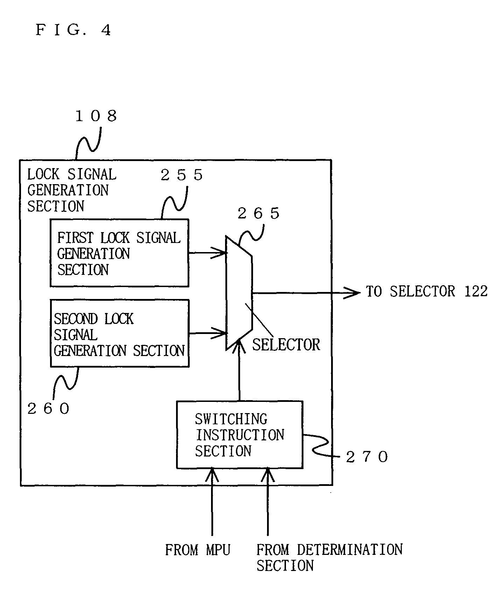

The lock signal generation section 108 creates a lock signal for establishing clock synchronization between the data transmission devices 1a-n, and, as shown in FIG. 4, includes a first lock signal generation section 255, a second lock signal generation section 260, a selector 265, and a switching instruction section 270. FIG. 4 is a block diagram illustrating a detailed structure of the lock signal generation section 108.

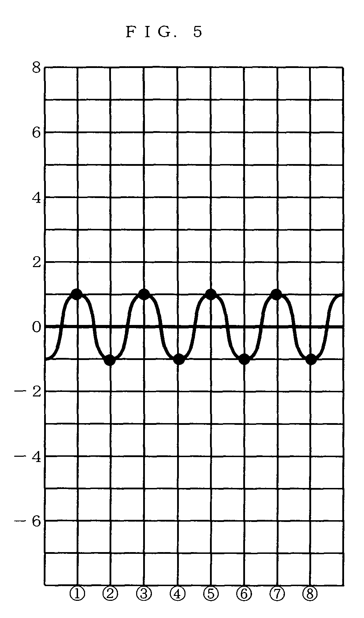

The first lock signal generation section 255 creates a "pattern 1 lock signal" as illustrated in FIG. 5. FIG. 5 is a graph illustrating a waveform of the pattern 1 lock signal. The pattern 1 lock signal is a signal used when the data transmission devices establish clock synchronization therebetween as well as a signal for notifying the data transmission devices that communication is performed by use of data subjected to eight-value mapping. One period of the pattern 1 lock signal consists of eight symbols, and it is a signal in which +1 and -1 alternate at each symbol. The pattern 1 lock signal is a signal subjected to eight-value mapping.

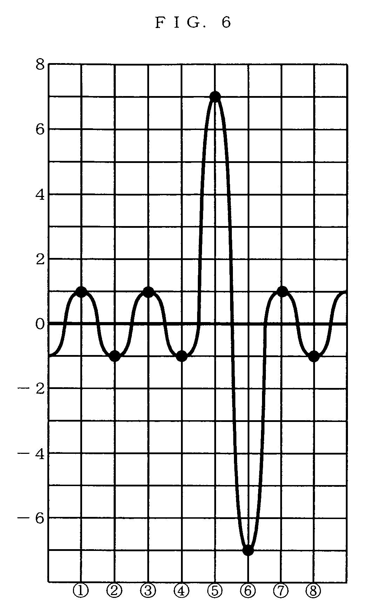

The second lock signal generation section 260 creates a "pattern 2 lock signal" as illustrated in FIG. 6. FIG. 6 is a graph illustrating a waveform of the pattern 2 lock signal. The pattern 2 lock signal is a signal used when the data transmission devices establish clock synchronization therebetween as well as a signal for notifying the data transmission devices that communication is performed by use of data subjected to four-value mapping. One period of the pattern 2 lock signal consists of eight symbols, and it is a signal in which +1 and -1 alternate at each symbol except that a fifth symbol takes +7 and a sixth symbol takes -7. The pattern 2 lock signal is a signal subjected to eight-value mapping.

The selector 265 outputs either the pattern 1 lock signal or the pattern 2 lock signal in accordance with an instruction from the switching instruction section 270. The switching instruction section 270 determines the type of lock signal to cause the selector 265 to output in accordance with an instruction from the MPU 15, in the case where the corresponding device thereof is the master. In the case where the corresponding device thereof is a slave, the switching instruction section 270 determines the type of lock signal to cause the selector 265 to output in accordance with an instruction from the determination section 190.

Next, the training signal generation section 105 creates a training signal for causing each data transmission devices to set determination levels for four-value mapping or determination levels for eight-value mapping. If the corresponding device thereof is the master, the training signal generation section 105 creates, in accordance with an instruction from the MPU 15, a training signal for four-value mapping or eight-value mapping, and if the corresponding device thereof is a slave, it creates, in accordance with an instruction from the determination section 190, a training signal for four-value mapping or eight-value mapping.

The selector 110 performs switching between the digital data TX outputted from the controller 5 and the training signal outputted from the training signal generation section 105. The S/P conversion section 115 converts the serial digital data TX into parallel form in order to perform multi-valued transmission. In the case where the communications protocol is the MOST and communication is performed by use of data subjected to eight-value mapping, since the controller 5 outputs information in two-bit-per-symbol form as the digital data TX, the S/P conversion section 115 converts the serially-inputted data into two-bit parallel data. In the case where the transmission method is data communication with four-value mapping, the S/P conversion section 115 does not perform the above conversion.

The mapping section 120 maps the data outputted from the S/P conversion section 115 and the training signal created by the training signal generation section 105 to symbols of eight or four values. Whether they are mapped to symbols of eight values or symbols of four values is instructed by the MPU 15 in the case where the corresponding device thereof is the master and instructed by the determination section 190 in the case where the corresponding device thereof is a slave.

The selector 122 outputs either the data outputted from the mapping section 120 or the lock signal outputted from the lock signal generation section 108. The roll off filter 125 is a waveform shaping filter for limiting the bandwidth of an electric signal to be transmitted and controlling intersymbol interference. For example, an FIR filter having a roll-off rate of 100% is used.

The DAC 130 converts the signal subjected to the bandwidth limiting by the roll off filter 125 into an analog signal. The differential driver 135 amplifies the intensity of the analog signal outputted from the DAC 130, converts it into a differential signal, and sends it to the transmission line 3. For a pair of lead wires included in the transmission line 3, the differential driver 135 transmits the electric signal, which is sent, to one side (a positive side) of the lead wires in the transmission line 3, and transmits a signal whose positive and negative are inverse to those of the electric signal to the other side (a negative side) in the transmission line 3. In this manner, the electric signal for the positive side and the electric signal for the negative side are transmitted, as a pair, to the transmission 3, whereby changes in one electric signal offset changes in the other electric signal. Thus, radiated noise from the transmission line 3 and electrical influence introduced from outside can be reduced.

Next, the reception group is described. The reception group, which includes the differential receiver 140, the ADC (analog to digital converter) 145, the roll off filter 150, the inverse mapping section 155, the P/S (Parallel/Serial) conversion section 160, and the clock recovery section 165, receives a signal transmitted from an upstream data transmission device.

The differential receiver 140 converts the differential signal inputted from the transmission line 3 into a voltage signal and outputs it to the ADC 145. Since, as described above, the positive side and negative side electric signals are transmitted as a pair to a pair of lead wires included in the transmission line 3, the differential receiver 140 determines the signals with reference to difference between the positive side and the negative side, whereby protection against electrical influence from outside is effectively provided. Then, the ADC 145 converts the voltage signal outputted from the differential receiver 140 into a digital signal.

The roll off filter 50 is an FIR filter for waveform shaping for performing noise reduction on the digital signal outputted from the ADC 145, and an FIR filter with sixteen times a symbol rate is used therefor, for example. It realizes a roll-off characteristic preventing intersymbol interference in conjunction with the above-described roll off filter 150 on the transmitting side. Based on the clock recovered at the clock recovery section 165, the inverse mapping section 155 recovers the data before being subjected to mapping at the mapping section 120 on the transmitting side with reference to difference between a received data value and a previous value. A difference process at the inverse mapping section 155 is performed using as reference the determination levels set by the above-described training signal, and the determination levels are used as ideal values in difference. By this inverse mapping process at the inverse mapping section 155, the received signal is converted into parallel data. The P/S conversion section 160 converts the parallel data determined by the inverse mapping section 155 into serial digital data RX, and outputs it to the controller 5.

The clock recovery section 165 recovers a clock component of the signal received from the transmission line 3 and outputted from the ADC 145, thereby recovering a transmission line clock. The recovered clock is used as a clock for processing of the signal on the receiving side and for a determination process by the determination group, which is described below.

Next, the determination group is described. The determination group, which includes the difference section 170, the magnitude determination section 180, the pattern discrimination section 185, and the determination section 190, determine information contained in the lock signal transmitted from a data transmission device connected upstream of the corresponding device thereof. More specifically, the determination group determines whether an incoming lock signal indicates that communication will be performed by use of data subjected to four-value mapping or that communication will be performed by use of data subjected to eight-value mapping.

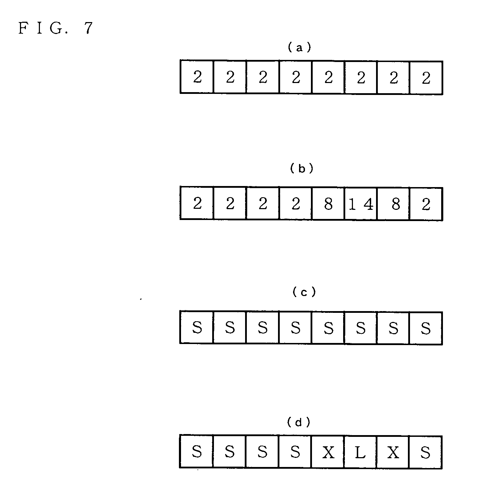

Based on the clock recovered by the clock recovery section 165, the difference section 170 reads the value of a symbol of the digital signal outputted from the ADC 145, calculates a difference between the value of the read symbol and the value of a previously-read symbol, and outputs the absolute value of the difference to the magnitude determination section 180. More specifically, in the case of the pattern 1 lock signal as illustrated in FIG. 5, each symbol takes +1 or -1 in an alternate manner; therefore, the difference section 170 outputs data as illustrated in FIG. 7A. On the other hand, in the case of the pattern 2 lock signal as illustrated in FIG. 6, the following pattern is observed: +1 , -1, +1, -1, +7, -7, +1, -1. Therefore, the difference section 170 outputs data as illustrated in FIG. 7B.

The magnitude determination section 180 determines whether a value outputted from the difference section 170 is larger than a predetermined threshold value. More specifically, assuming that the predetermined threshold value is "5", for example, if the data as illustrated in FIG. 7A is inputted, the magnitude determination section 180 outputs to the pattern discrimination section 185 the inputted data as "S", which represents "smaller than the threshold value". On the other hand, if the data as illustrated in FIG. 7B is inputted, the magnitude determination section 180 outputs "S", which represents "smaller than the threshold value", for "2" parts, and outputs "L", which represents "larger than the threshold value", for "7" and "14" parts. Note that, actually, in the case of "S", "0" is outputted, and in the case of "L", "1" is outputted.

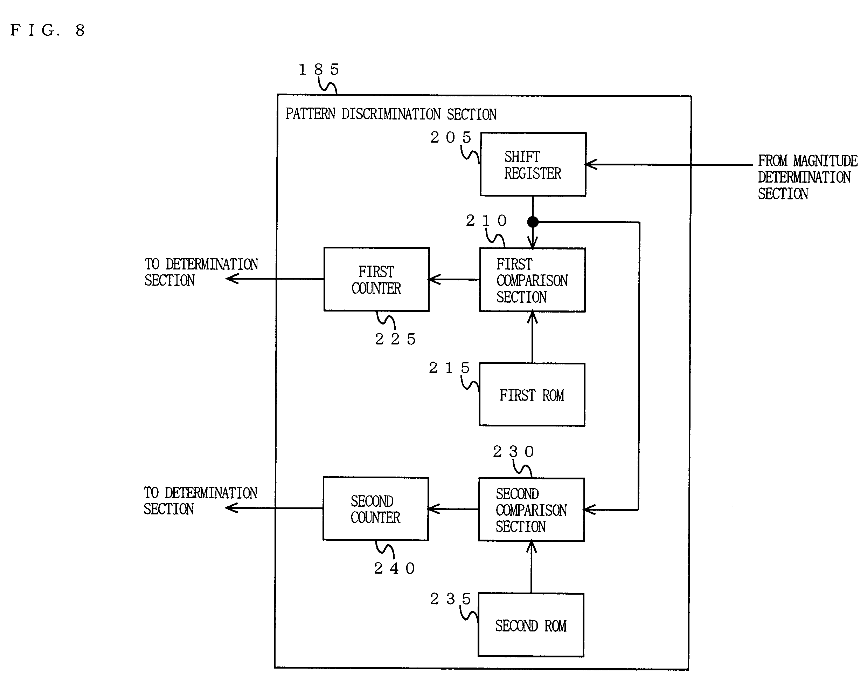

The pattern discrimination section 185 determines whether the lock signal transmitted from an upstream data transmission device is the pattern 1 lock signal or the pattern 2 lock signal, and, as illustrated in FIG. 8, includes a shift register 205, a first comparison section 210, a first ROM 215, a first counter 225, a second comparison section 230, a second ROM 235, and a second counter 240. FIG. 8 is a block diagram illustrating a detailed structure of the pattern discrimination section 185.

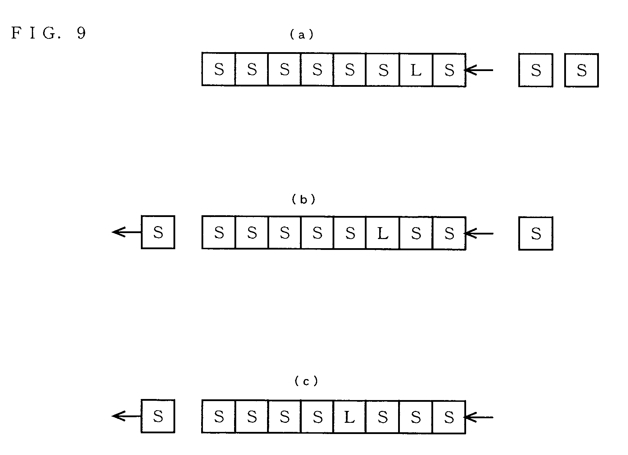

The shift register 205, having a predetermined number of bits of data stored therein, deletes the oldest one bit of data every time one bit of data is newly inputted from the magnitude determination section 180. More specifically, as illustrated in FIG. 9A, the shift register 205 is capable of storing eight bits of data in the present embodiment. As illustrated in FIGS. 9B and 9C, once a bit representing "S" is newly inputted, the shift register 205 discards the oldest data, i.e., a bit representing "S". FIG. 9 is a diagram illustrating an example of an operation of the shift register.

In the first ROM 215, data as illustrated in FIG. 7C is stored. The data illustrated in FIG. 7C is data outputted from the difference section 170 in the case where the pattern 1 lock signal has been inputted into the difference section 170.

Every time one bit of data is inputted to the shift register 205, the first comparison section 210 determines whether data stored in the shift register 205 corresponds with the data stored in the first ROM 215. If they correspond with each other, the first comparison section 210 outputs, to the first counter 225, "1", which represents correspondence. On the other hand, if they do not correspond with each other, the first comparison section 210 outputs, to the first counter 225, "0", which represents non-correspondence.

The first counter 225 counts the number of "1"s outputted from the first comparison section 210, and, if the number of counts reaches sixteen, outputs this fact to the determination section 190. Note that the number of counts is not limited to sixteen.

In the second ROM 235, data as illustrated in FIG. 7D is stored. The data illustrated in FIG. 7D is data outputted from the difference section 170 in the case where the pattern 2 lock signal has been inputted into the difference section 170. Note that fourth and sixth data is "X". This suggests that these portions may be either "S" or "L". This is because these portions cannot be properly used for determination, because the fourth and sixth data is "7", as illustrated in FIG. 7B, which is a value taking "L" or "S" in a fluctuate manner depending on the predetermined threshold value.

Every time one bit of data is inputted to the shift register 205, the second comparison section 230 determines whether data stored in the shift register 205 corresponds with the data stored in the second ROM 230. If they correspond with each other, the second comparison section 230 outputs, to the second counter 240, "1", which represents correspondence. On the other hand, if they do not correspond with each other, the second comparison section 230 outputs, to the second counter 240, "0", which represents non-correspondence.

The second counter 240 counts the number of "1"s outputted from the second comparison section 230, and, if the number of counts reaches sixteen, outputs this fact to the determination section 190. Note that the number of counts is not limited to sixteen.

Based on an output result outputted from either the first counter 225 or the second counter 240, the determination section 190 determines whether the inputted lock signal is the pattern 1 lock signal or the pattern 2 lock signal. In other words, the determination section 190 determines whether the communication will be performed by use of data subjected to eight-value mapping or data subjected to four-value mapping.

Here, the reason why the data as illustrated in FIG. 7A or 7B itself is not inputted to the pattern discrimination section 185, as described above, is described. In the data transmission system according to the present embodiment, the determination process is performed before the training signal is transmitted to each data transmission device. Therefore, in each data transmission device, the training process has not been performed yet, and the setting of the data determination levels has not been performed yet, either. Consequently, each data transmission device cannot perform precise determination of a signal level of data. Thus, the data transmission device according to the present embodiment discriminates between the pattern 1 lock signal and the pattern 2 lock signal by performing rough determination, i.e., that of whether the signal level of data is larger or smaller than the threshold value.

An operation of the data transmission system constructed as described above is described below. Processes illustrated in the present embodiment can be implemented by software using a computer or by using hardware circuits dedicated to these processes.

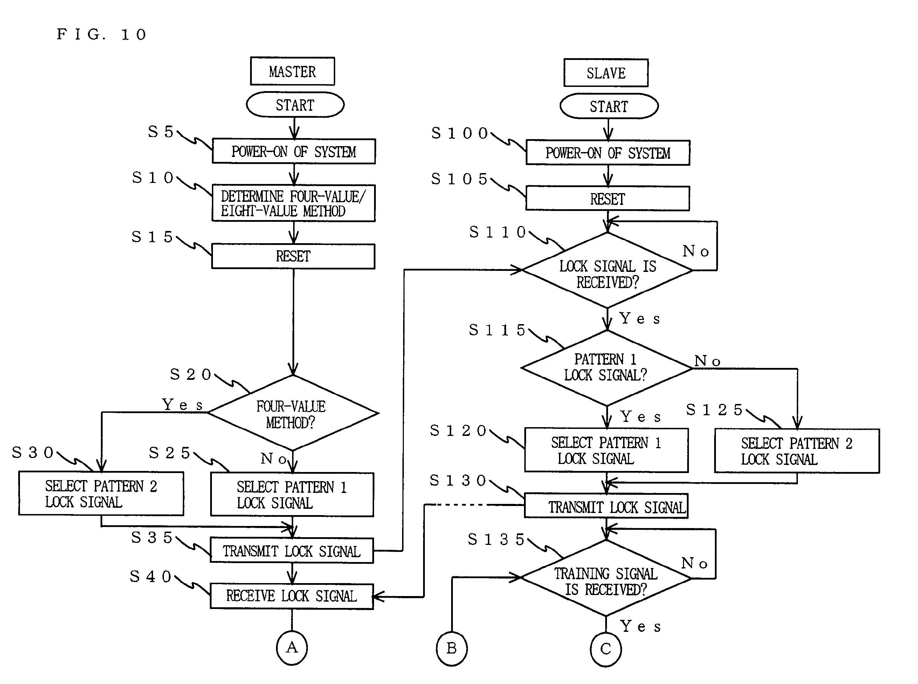

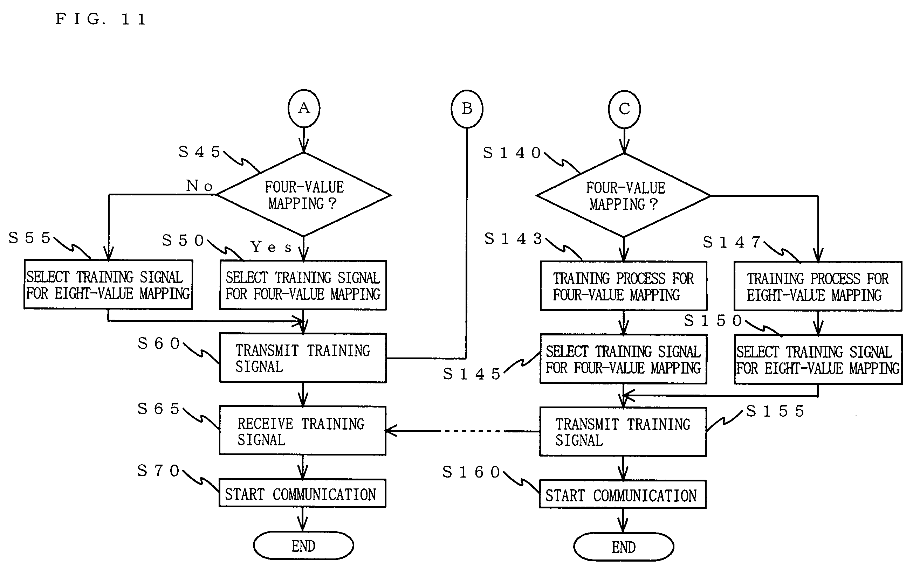

Hereinafter, the initial operation performed by each data transmission device before data communication starts in the data transmission system is described with reference to the drawings. FIGS. 10 and 11 are flowcharts illustrating initial operations performed by the master data transmission device and the slave data transmission devices before data communication starts. Herein, the data transmission device 1a is the master, and the data transmission devices 1b-n are slaves.

First, power of all data transmission devices 1a-1n connected to the data transmission system is turned on, and thereby, power of the data transmission system is turned on (steps S5 and S100) . At this time, the MPU 15 of the master data transmission device 1a decides by use of which the data communication will be performed, data subjected to four-value mapping or data subjected to eight-value mapping (step S10) . Thereafter, under control of the MPU 15 provided in each of the data transmission devices 1a-1n, the setting of each of the data transmission devices 1a-1n is reset (steps S15 and S105).

Next, the master data transmission device 1a determines whether or not the communication method determined by the MPU 15 thereof at step S10 is communication by use of data subjected to four-value mapping (step S20). In the case where it is not the communication by use of data subjected to four-value mapping, the present process proceeds to step S25. In the case where it is the communication by use of data subjected to four-value mapping, the present process proceeds to step S30.

In the case where communication will not be performed by use of data subjected to four-value mapping, the master data transmission device 1a selects the pattern 1 lock signal including information indicating that communication by use of data subjected to eight-value mapping will be started (step S25). An operation performed within the data transmission device 1a at step S25 is described in detail.

In the case where communication will be performed by use of data subjected to eight-value mapping, the MPU 15 reports this fact to the switching instruction section 270 in the lock signal generation section 108. In response to this, the switching instruction section 270 controls the selector 265 so as to output the pattern 1 lock signal outputted from the first lock signal generation section 255. Thus, the pattern 1 lock signal is selected.

On the other hand, in the case where communication will be performed by use of data subjected to four-value mapping, the master data transmission device 1a selects the pattern 2 lock signal including information indicating that communication by use of data subjected to four-value mapping will be started (step S30). An operation performed within the data transmission device 1a at step S30 is described in detail.

In the case where communication will be performed by use of data subjected to four-value mapping, the MPU 15 reports this result to the switching instruction section 270 in the lock signal generation section 108. In response to this, the switching instruction section 270 controls the selector 265 so as to output the pattern 2 lock signal outputted from the second lock signal generation section 260. Thus, the pattern 2 lock signal is selected.

Next, the master data transmission device 1a transmits the lock signal selected at the above-described step S25 or 30 (step S35). More specifically, the lock signal outputted from the selector 122 is subjected to predetermined processes between the roll off filter 125 and the differential driver 135, and transmitted to the slave data transmission device 1b.

Meanwhile, after the reset is performed, the slave data transmission device 1b is waiting while conducting determination as to whether the lock signal has been received or not (step S110). In the case where the data transmission device 1b receives the lock signal transmitted from the master data transmission device 1a, the present process proceeds to step S115. On the other hand, if the data transmission device 1b does not receive the lock signal transmitted from the master data transmission device 1a, the present process returns to step S110.

In the case where the lock signal is received, the determination group of the slave data transmission device 1b determines whether the lock signal is the pattern 1 lock signal or not (step S115). A process performed within the slave data transmission device 1b at step S115 is described in detail below.

The lock signal transmitted from the master data transmission device 1a is subjected to the predetermined processes in the differential receiver 140 and the ADC 145 and outputted to the clock recovery section 165 and the difference section 170. Based on the lock signal, the clock recovery section 165 performs clock recovery. Based on the clock recovery performed by the clock recovery section 165, the difference section 170 obtains differences in value between each symbol of the lock signal, and outputs such data as illustrated in FIGS. 7A and 7B to the magnitude determination section 180.

Next, the magnitude determination section 180 determines, with respect to each data outputted from the difference section 170, whether it is larger than the predetermined threshold value or not, and outputs determination results to the pattern discrimination section 185. More specifically, in the case where the predetermined threshold value is 5, the pattern discrimination section 185 outputs determination results "S, S, S, S, S, S, S, S" for the input data of FIG. 7A and determination results "S, S, S, S, L, L, L, S" for the input data of FIG. 7B. In accordance therewith, either of the above-described two types of determination results is inputted to the shift register 205 in the pattern discrimination section 185 in a bit-by-bit manner.

The first comparison section 210 compares data representing the pattern 1 lock signal stored in the first ROM 215 with data stored in the shift register 205 every time one bit of the data is inputted to the shift register 205, and, if they correspond with each other, outputs "1" to the first counter 225. Similarly, the second comparison section 230 compares data representing the pattern 2 lock signal stored in the second ROM 235 with data stored in the shift register 205 every time one bit of the data is inputted to the shift register 205, and, if they correspond with each other, outputs "1" to the second counter 240.

The first counter 225 counts the number of "1"s outputted from the first comparison section 210. The second counter 240 counts the number of "1"s outputted from the second comparison section 230. Then, when the number of "1"s counted reaches sixteen, the counters report this result to the determination section 190.

Finally, the determination section 190 determines from which counter the report has come. Here, if the report has come from the first counter 225, the determination section 190 determines that the pattern 1 lock signal has been received and recognizes that communication by use of data subjected to eight-value mapping will be performed in the data transmission system. On the other hand, if the report has come from the second counter 240, the determination section 190 determines that the pattern 2 lock signal has been received and recognizes that communication by use of data subjected to four-value mapping will be performed in the data transmission system. Then, the determination section 190 reports the recognition result to each component connected thereto. Thus, the determination process of step S115 is completed.

Returning back to description of the flowchart of FIG. 10, in the case where the lock signal is the pattern 1 lock signal at step S115 , the present process proceeds to step S120. On the other hand, in the case where the lock signal is not the pattern 1 lock signal at step S115, the present process proceeds to step S125.

In the case where the lock signal is the pattern 1 lock signal, the lock signal generation section 108 selects and outputs the pattern 1 lock signal (step S120) . The process performed at step S120 is the same as that of the above-described step S25 except that the instruction from the MPU 15 is replaced by the report from the determination section 190; therefore, description thereof is omitted.

On the other hand, in the case where the lock signal is the pattern 2 lock signal, the lock signal generation section 108 selects and outputs the pattern 2 lock signal (step S125). The process performed at step S125 is the same as that of the above-described step S30 except that the instruction from the MPU 15 is replaced by the report from the determination section 190; therefore, description thereof is omitted.

Thereafter, the lock signal outputted from the lock signal generation section 108 is outputted from the transmission/reception section 10 of the slave data transmission device 1b to the next data transmission device 1c. In the transmission/reception section 10 of each of the data transmission devices 1c-n, the above-described processes of steps S110 to 130 are performed. Then, finally, the slave data transmission device In outputs the lock signal to the master data transmission device 1a. In response to this, the master data transmission device 1a receives the lock signal (step S40).

Next, the MPU 15 of the master data transmission device 1a determines whether the communication method is communication by use of data subjected to four-value mapping or not (step S45). This determination is made based on which the MPU 15 has selected at the time of power-on of the system, four-value mapping or eight-value mapping. In the case where the communication method is communication by use of data subjected to four-value mapping, the present process proceeds to step S50. On the other hand, in the case where the communication method is not communication by use of data subjected to four-value mapping, the present process proceeds to step S55.

In the case where the communication method is communication by use of data subjected to four-value mapping, the MPU 15 causes the training signal generation section 105 to select and output a training signal for four-value mapping (step S50).

On the other hand, in the case where the communication method is communication by use of data subjected to eight-value mapping, the MPU 15 causes the training signal generation section 105 to select and output a training signal for eight-value mapping (step S55).

The training signal outputted from the training signal generation section 105 passes through the selector 110, is subjected to predetermined processes between the S/P conversion section 115 and the differential driver 135, and is transmitted to the slave data transmission device 1b (step S60).

Meanwhile, after the lock signal is transmitted at step S130, the slave data transmission device 1b is waiting while conducting determination as to whether the training signal is received or not (step S135) . Here, if the data transmission device 1b receives the training signal transmitted from the master data transmission device 1a, the present process proceeds to step S140. On the other hand, if the data transmission device 1b does not receive the training signal transmitted from the master data transmission device 1a, the present process returns to step S135.

In the case where the training signal has been received, the slave data transmission device 1b determines whether the communication method is communication by use of data subjected to four-value mapping or not (step S140) . This determination is made by the training signal generation section 105 based on which the determination section 190 has recognized at the determination at step S115, communication by use of data subjected to four-value mapping or communication by use of data subjected to eight-value mapping.

In the case where it is determined that the communication method is communication by use of data subjected to four-value mapping, the slave data transmission device 1b performs a mapping process for communication by use of data subjected to four-value mapping, by employing the training signal received by the inverse mapping section 155 (step S143). Next, the training signal generation section 105 selects and outputs the training signal for four-value mapping (step S145). A process performed at step S145 is similar to the process performed at step S50; therefore, a detailed description thereof is omitted.

On the other hand, in the case where it is determined that the communication method is communication by use of data subjected to eight-value mapping, the slave data transmission device 1b performs a mapping process for communication by use of data subjected to eight-value mapping, by employing the training signal received by the inverse mapping section 155 (step S147). Next, the training signal generation section 105 selects and outputs the training signal for eight-value mapping (step S150). A process performed at step S150 is similar to the process performed at step S55; therefore, a detailed description thereof is omitted.

The slave data transmission device 1b transmits to the next slave data transmission device 1c the training signal outputted from the training signal generation section 105 (step S155). A process performed at step S155 is similar to the process performed at step S60; therefore, a detailed description thereof is omitted.

Thereafter, the transmission/reception section 10 of each of the data transmission devices 1c-n also performs the above-described processes of steps S135 to S155. Then, finally, the slave data transmission device In outputs the training signal to the master data transmission device 1a. Accordingly, the master data transmission device 1a receives the training signal (step S65) . Thus, the training process is completed, and data communication is started in the data transmission system (step S70 and step S160).

As described above, in the data transmission system according to the present embodiment, the master data transmission device transmits to each slave data transmission device the lock signal in which a predetermined information is embedded at the time of initial operation. This enables each slave data transmission device to acquire the predetermined information prior to training. As a result, for example, it is made possible that each slave data transmission device recognizes prior to training which of the following will be performed, communication by use of data subjected to four-value mapping or communication by use of data subjected to eight-value mapping. This makes it possible to eliminate the need to perform a training process twice as in conventional data transmission systems, i.e., the training process is required to be performed only once.

Note that, in the present embodiment, information as to by which of the following the communication is performed is embedded in the lock signal, communication by use of data subjected to four-value mapping or communication by use of data subjected to eight-valuemapping; however, thevalueofthemulti-valuedmapping is not limited to these. For example, the value of the multi-valued mapping may be five.

Note that, in the present embodiment, information as to by which of the following the communication is performed is embedded in the lock signal, communication by use of data subjected to four-value mapping or communication by use of data subjected to eight-value mapping; however, the information embedded in the lock signal is not limited to this. The information embedded in the lock signal may be any information as long as it is information to be given to each slave data transmission device at the time of initial operation.

Note that, in the present embodiment, two types of lock signals, i.e., the pattern 1 lock signal and the pattern 2 lock signal, are used; however, the number of types, and the waveforms, of lock signals are not limited to these.

Note that, in the present embodiment, differences in signal level between each symbol are compared as illustrated in FIG. 7 in order to discriminate between the pattern 1 lock signal and the pattern 2 lock signal; the method for discriminating between the pattern 1 lock signal and the pattern 2 lock signal is not limited to this. More specifically, the first comparison section 210 and the second comparison section 230 may discriminate between the pattern 1 lock signal and the pattern 2 lock signal by comparing values of symbols of the received lock signal. In this case, the values of the symbols are stored in the first ROM 215 and the second ROM 235.

### INDUSTRIAL APPLICABILITY

The data transmission system according to the present invention has the effect of being capable of presenting, to each data transmission device, predetermined information for giving a notice of a data transmission method or the like before a training process is performed, and is usable as, for example, a data transmission system for transmitting data in a unidirectional manner according to a predetermined protocol in a ring network in which a plurality of data transmission devices are connected so as to form a ring structure.

## Claims

1. A data transmission system for transmitting data in a unidirectional manner according to a predetermined protocol in a ring network in which a plurality of data transmission devices are connected so as to form a ring structure, wherein,
one of the plurality of data transmission devices is a master data transmission device, and the others are slave data transmission devices,
the master data transmission device includes:
master lock signal generation means for generating a lock signal for establishing clock synchronization with the slave data transmission devices in initial operation of the ring network, the lock signal having predetermined information embedded therein; and
master transmission means for outputting the lock signal generated by the master lock signal generation means to a slave data transmission device connected downstream thereof to relay the lock signal through the ring network, and
the slave data transmission devices each include:
slave reception means for receiving the lock signal outputted from the master transmission means; and
information acquisition means for acquiring the predetermined information from the lock signal received by the slave reception means.

2. The data transmission system according to claim 1, wherein,
the master lock signal generation means generates a plurality of patterns of lock signals including the predetermined information of a plurality of types,
the master data transmission device further includes determination means for determining, from among the plurality of patterns of lock signals, which pattern of lock signal to cause the master lock signal generation means to output, and
the master transmission means transmits that pattern of lock signal which the determination means has caused the master lock signal generation means to output.

3. The data transmission system according to claim 2, wherein,
the information acquisition means further includes storage means for storing signals identical to the plurality of patterns of lock signals, and
the information acquisition means compares the lock signal received by the slave reception means with the signals stored in the storage means, and determines which pattern of lock signal has been acquired, thereby acquiring the predetermined information.

4. The data transmission system according to claim 2, wherein,
the information acquisition means further includes:
storage means for storing, for each of the plurality of patterns of lock signals, a pattern of differences in signal level between each symbol and a symbol positioned next to that symbol in the lock signal; and
difference means for obtaining differences in signal level between each symbol and a symbol positioned next to that symbol in the lock signal received by the slave reception means, and
the information acquisition means compares the differences obtained by the difference means with the patterns of differences of the lock signals stored in the storage means, and determines which pattern of lock signal has been acquired, thereby acquiring the predetermined information.

5. The data transmission system according to claim 3, wherein the slave data transmission devices each include:
slave lock signal generation means for generating a lock signal having a pattern identical to the pattern of the lock signal determined by the information acquisition means; and
slave transmission means for transmitting the lock signal generated by the slave lock signal generation means to a data transmission device connected downstream thereof.

6. The data transmission system according to claim 1, wherein,
the slave data transmission devices each further include
synchronization means for establishing clock synchronization with the master data transmission device based on the lock signal received by the slave reception means, and
the information acquisition means acquires the predetermined information included in the lock signal, based on timing of the clock synchronization established by the synchronization means.

7. The data transmission system according to claim 1, wherein the predetermined protocol is MOST (Media Oriented Systems Transport).

8. The data transmission system according to claim 7, wherein each data transmission device performs communication by use of an electric signal.

9. The data transmission system according to claim 1, wherein,
a plurality of communication methods are available in the ring network, and
the predetermined information is information for switching between communication methods in the ring network.

10. The data transmission system according to claim 9, wherein,
a multi-valued electric signal is transmitted in the ring network,
a plurality of methods for setting determination levels are available for determining data included in the multi-valued electric signal, and
the communication methods in the ring network are the plurality of methods for setting the determination levels in data communication.

11. A master data transmission device connected to at least one slave data transmission device so as to form a ring structure to form a ring network, the master data transmission device transmitting data in a unidirectional manner in the ring network according to a predetermined protocol, the master data transmission device comprising:
master lock signal generation means for generating a lock signal for establishing clock synchronization with the slave data transmission devices in initial operation of the ring network, the lock signal having predetermined information embedded therein; and
master transmission means for outputting the lock signal generated by the master lock signal generation means to one of the at least one slave data transmission device connected downstream thereof to relay the lock signal through the ring network.

12. The master data transmission device according to claim 11, wherein,
the master lock signal generation means generates a plurality of patterns of lock signals including the predetermined information of a plurality of types,
the master data transmission device further comprises determination means for determining, from among the plurality of patterns of lock signals, which pattern of lock signal to cause the master lock signal generation means to output, and
the master transmission means transmits that pattern of lock signal which the determination means has caused the master lock signal generation means to output.

13. The master data transmission device according to claim 11, wherein the predetermined protocol is MOST (Media Oriented Systems Transport).

14. The master data transmission device according to claim 13, wherein the data is transmitted by use of an electric signal.

15. The master data transmission device according to claim 11, wherein,
a plurality of communication methods are available in the ring network, and
the predetermined information is information for switching between communication methods in the ring network.

16. The master data transmission device according to claim 15, wherein,
amulti-valued electric signal is transmitted in the network,
a plurality of methods for setting determination levels are available for determining data included in the multi-valued electric signal, and
the communication methods in the ring network are the plurality of methods for setting the determination levels in data communication .

17. A slave data transmission device connected to a master data transmission device so as to form a ring structure to form a ring network, the ring network including at least one slave data transmission device, the slave data transmission device transmitting data in a unidirectional manner in the ring network according to a predetermined protocol, wherein,
the master data transmission device outputs a lock signal for establishing clock synchronization in the ring network to one of the at least one slave data transmission device connected downstream thereof to relay the lock signal through the ring network, the lock signal having predetermined information embedded therein, and
the slave data transmission device comprises:
slave reception means for receiving the lock signal outputted from the master data transmission device; and
information acquisition means for acquiring the predetermined information from the lock signal received by the slave reception means.

18. The slave data transmission device according to claim 17, wherein,
the master data transmission device transmits one of a plurality of patterns of lock signals including the predetermined information of a plurality of types to be relayed through the ring network,
the information acquisition means further includes storage means for storing signals identical to the plurality of patterns of lock signals, and
the information acquisition means compares the lock signal received by the slave reception means with the signals stored in the storage means, and determines which pattern of lock signal has been acquired, thereby acquiring the predetermined information.

19. The slave data transmission device according to claim 17, wherein,
the master data transmission device transmits one of a plurality of patterns of lock signals including the predetermined information of a plurality of types to be relayed through the ring network,
the information acquisition means further includes:
storage means for storing, for each of the plurality of patterns of lock signals, a pattern of differences in signal level between each symbol and a symbol positioned next to that symbol in the lock signal; and
difference means for obtaining differences in signal level between each symbol and a symbol positioned next to that symbol in the lock signal received by the slave reception means, and
the information acquisition means compares the differences obtained by the difference means with the patterns of differences of the lock signals stored in the storage means, and determines which pattern of lock signal has been acquired, thereby acquiring the predetermined information.

20. The slave data transmission device according to claim 18, comprising:
slave lock signal generation means for generating a lock signal having a pattern identical to the pattern of the lock signal determined by the information acquisition means; and
slave transmission means for transmitting the lock signal generated by the slave lock signal generation means to the master data transmission device or another of the at least one slave data transmission device connected downstream thereof.

21. The slave data transmission device according to claim 17, further comprising synchronization means for establishing clock synchronization with the master data transmission device based on the lock signal received by the slave reception means, wherein
the information acquisition means acquires the predetermined information included in the lock signal, based on timing of the clock synchronization established by the synchronization means.

22. The slave data transmission device according to claim 17, wherein the predetermined protocol is MOST (Media Oriented Systems Transport).

23. The slave data transmission device according to claim 22, wherein the data is transmitted by use of an electric signal.

24. The slave data transmission device according to claim 17, wherein,
a plurality of communication methods are available in the ring network, and
the predetermined information is information for switching between communication methods in the ring network.

25. The slave data transmission device according to claim 24, wherein,
amulti-valued electric signal is transmitted in the network,
a plurality of methods for setting determination levels are available for determining data included in the multi-valued electric signal, and
the communication methods in the ring network are the plurality of methods for setting the determination levels in data communication .
